# EUROPEAN PATENT APPLICATION

(11) **EP 3 345 778 A1**
(43) Date of publication of application: **11.07.2018**
(21) Application number: 16841628.7
(22) Date of filing: 25.08.2016
(51) Int. Cl.: B60K 1/02, B60K 11/02, B60L 9/18, B60L 15/00, B60L 15/20, F16H 1/06, H02K 5/20, H02K 7/116

(54) **ELECTRIC VEHICLE**

(30) Priority: 31.08.2015 JP 2015170016
(71) Applicant: NTN Corporation, Osaka-shi, Osaka 550-0003 (JP)
(72) Inventor: HIRAI, Isao, Iwata-shi Shizuoka 438-8510 (JP)
(74) Representative: Grünecker Patent- und Rechtsanwälte PartG mbB
(86) International application number: PCT/JP2016/074739
(87) International publication number: WO 2017/038596

(57) **Abstract**

In an electric vehicle in which front wheels are drive wheels, this invention is to provide an electric vehicle capable of endowing the front wheels with sufficient traction and obtain excellent travel performance.

The electric vehicle has a sub-frame (56) that fixes a two-motor electric drive device (A) that drives the front wheels (51), at the front of a vehicle body. The two-motor electric drive device (A) that is fixed to the sub-frame (56) has two electric motors (1L, 1R) and two speed reducers (2L, 2R). The two speed reducers (2L, 2R) are integrally housed in a housing (20). The two speed reducers (2L, 2R) are sandwiched by the two electric motors (1L, 1R) and thereby integrated with each other. The lower part of the two-motor electric drive device (A) is fixed to the sub-frame (56) so as to be approximately the same height as the undersurface of the vehicle body. An electricity storage section (54) that supplies electric power that drives the two electric motors (1L, 1R) is disposed in a space between an axle of the front wheels (51) and an axle of rear wheels (55). An inverter unit (57) is disposed in proximity to the electric drive device (A).

## Description

### Technical Field

The present invention relates to an electric vehicle in which, among four wheels, at least the front left and right wheels are drive wheels.

### Background Art

A front-wheel drive system, a rear-wheel drive system and a four-wheel drive system are available as drive systems for an automobile. In the case of mounting a drive device at the front part of the vehicle body, a front-wheel drive system is applied in many cases to an electric vehicle because the vehicle weight can be reduced and enlargement of the vehicle interior is facilitated since it is not necessary to provide a propeller shaft that transmits a driving force to the rear part of the vehicle body.

In this connection, as a drive device for an electric vehicle, a two-motor electric drive device that is equipped with two electric motors that independently drive left and right drive wheels, respectively, is disclosed in Patent Literature 1, Patent Literature 2 and Patent Literature 3.

Among the aforementioned Patent Literatures 1 to 3, Patent Literature 1 discloses technology regarding the arrangement of a battery and an inverter and the like in the case of applying a two-motor electric drive device to an electric vehicle that utilizes a rear-wheel drive system.

With regard to the electric vehicles discussed in Patent Literature 2 and Patent Literature 3, it is unknown whether the respective electric vehicles adopt a front-wheel drive system or a rear-wheel drive system.

### Citation List

### Patent Literature

Patent Literature 1: U.S. Patent No. 8800699 Specification
Patent Literature 2: Japanese Patent Laid-Open No. 05-116542
Patent Literature 3: Japanese Patent Laid-Open No. 2010-48379

### Summary of Invention

### Technical Problem

Because a two-motor electric drive device can drive a left wheel and a right wheel independently of each other, there is the advantage that the travel performance of the vehicle is improved, such as by improving the turning performance. In this case, the term "improving the turning performance" refers to making it easier for the vehicle to turn by generating a larger driving force at a turning outer wheel than at a turning inner wheel when turning. Further, as another improvement in the travel performance, when the vehicle starts to move in a case where one of the wheels is on a dry, high-friction road surface and the other wheel is on a low-friction road surface such as a compressed snow covered road, there is the advantage that it is possible for the vehicle to start to move in a short time by applying a larger driving force to the high-friction road surface side on which the wheel is not liable to slip.

A frictional force between the tires and the ground surface is important in order to adequately exert the driving force of a two-motor electric drive device. That is, because a state in which traction is not imparted and the tires slip (rotate idly) is entered if the driving force exceeds the frictional force, conversely, the travel performance (turning performance and the like) deteriorates. Slipping will also occur if, not just the driving force, but also a force that attempts to change the direction of the vehicle body which arises at the tires during turning exceeds the frictional force, and it will become difficult for the direction of the vehicle body to change.

A frictional force between the tires and the ground surface depends on the weight applied to the drive wheels and the state of the road surface.

Accordingly, if the mass of the vehicle is increased, the load applied to the drive wheels will increase and the frictional force will become larger. However, in the case of a vehicle with a heavy vehicle weight, because a centrifugal force when turning is large, the turning performance will decline and a greater amount of energy will be required for travel.

In an electric vehicle that adopts a front-wheel drive system, it is desirable that, when turning, a sufficient driving force can be transmitted to the outside wheel, and also that a sufficient driving force can be transmitted to the front wheels, that is, traction is imparted to the front wheels, even in a state in which the center of gravity moves to the rear part of the vehicle such as when starting to move suddenly or when travelling up an upward slope, and in a state in which the road surface is slippery, such as in rainy weather.

Therefore, an object of the present invention is to provide an electric vehicle in which at least the front wheels are drive wheels, and in which the front wheels are endowed with sufficient traction and superior travel performance is obtained, and furthermore in which each component is designed so as not to narrow the space inside the vehicle.

### Solution to Problem

An electric vehicle according to the present invention includes a sub-frame that fixes a two-motor electric drive device that drives front wheels at a front part of a vehicle body, wherein the two-motor electric drive device that is fixed to the sub-frame includes two electric motors that are coaxially aligned in a lateral direction of the vehicle body, and two speed reducers that receive and decelerate a rotation of the two electric motors, respectively; the two speed reducers are integrally housed in a housing; the two speed reducers are sandwiched between the two electric motors and thereby integrated with each other; axles of the two electric motors come out from the electric motors in an inward direction of the vehicle body towards the speed reducers; speed reduction mechanisms of the two speed reducers are independent on the left and right, respectively; two output shafts of the two-motor electric drive device that are decelerated by the speed reducers are coaxially aligned in the lateral direction of the vehicle body; the two output shafts drive each of left and right wheels, that are front wheels through a drive shaft, respectively; a lower part of the two-motor electric drive device is fixed to the sub-frame so as to be approximately the same height as an undersurface of the vehicle body; an electricity storage section that, when at least one electric motor of the two electric motors operates as a drive motor, supplies electric power to the electric motor, and when at least one electric motor of the two electric motors operates as a power generator, is charged with electric power produced by the power generator is mounted in a space between a front-wheel axle and a rear-wheel axle at a position that is further toward rear of the vehicle than the two-motor electric drive device that drives the front wheels; and an inverter unit that, when driving an electric motor as a drive motor, converts direct-current (DC) power from the electricity storage section to three-phase alternating-current (AC) electric power, and converts three-phase AC electric power produced by an electric motor as a power generator to DC power for charging the electricity storage section is disposed in proximity to the two-motor electric drive device.

The electricity storage section is mounted to a lower part of the vehicle body such that an undersurface of the electricity storage section is approximately the same height as a lower part of the two-motor electric drive device.

The respective electric motors on left and right of the two-motor electric drive device and the output shafts are connected by the speed reducers, the output shaft is a part of the speed reducer, the electric motor and the speed reducer are integrated with and housed in the housing, the output shaft comes out from the housing, and the speed reducer has a plurality of gear shafts.

The two-motor electric drive device is mounted at the center in a transverse direction of the vehicle, and the drive shafts that are connected to the output shafts and transmit a driving force to the left and right wheels, respectively, are made the same length on the left and right.

The axle of the electric motor is the same height as the output shaft of the drive device or is lower than the output shaft.

The two electric motors of the two-motor electric drive device that drives the front wheels are disposed further to the front of the vehicle body than an axle of the left and right front wheels, and a steering box of a steering device is disposed rearward of the two-motor electric drive device.

A cooling water channel is provided inside an electric motor housing that houses the two electric motors of the two-motor electric drive device, and a radiator that cools cooling water of the cooling water channel is mounted at a front part of the vehicle body.

The radiator may be divided into two systems on top and bottom or left and right, and one system of the two systems may be connected to a cooling water channel of one electric motor of the two electric motors, and the other system of the two systems may be connected to a cooling water channel of the other electric motor of the two electric motors.

Another device such as an inverter unit may be disposed partway along the cooling water channel, and the other device may be cooled.

### Advantageous Effects of Invention

As described above, the electric vehicle of the present invention has a common front-wheel drive layout in a compact car, and can utilize assets such as the suspension design of an engined vehicle.

By mounting the two-motor electric drive device that drives the front wheels at a front part of the vehicle body, and mounting the electricity storage section in a space between the front-wheel axle and the rear-wheel axle, the front wheels can be endowed with sufficient traction and excellent travel performance can be obtained without narrowing the interior space of the vehicle.

By disposing the two-motor electric drive device and the electricity storage section at a low position, the electric vehicle has a low center of gravity and is stable.

Because the two-motor electric drive device is bilaterally symmetrical, a weight balance between left and right is good, and travel performance is improved by right and left independent driving that controls the driving forces of the left and right wheels, respectively.

Since the two-motor electric drive device is disposed on a sub-frame at the front part of the vehicle body, assemblability is improved and the quietness properties are also high.

By cooling the electric motors of the two-motor electric drive device, a rise in temperature can be suppressed, and travel for an extended period that utilizes the capacity of the electricity storage section mounted in the vehicle is enabled.

### Brief Description of Drawings

[Fig. 1] Fig. 1 is a side view of an embodiment of an electric vehicle according to the present invention.
[Fig. 2] Fig. 2 is a plan view of the embodiment illustrated in Fig. 1.
[Fig. 3] Fig. 3 is an enlarged view of a hub bearing portion of the embodiment illustrated in Fig. 1.
[Fig. 4] Fig. 4 is a side view of another embodiment of the electric vehicle according to the present invention.
[Fig. 5] Fig. 5 is a piping diagram of a cooling water channel that cools electric motors of a two-motor electric drive device of the electric vehicle according to the present invention.
[Fig. 6] Fig. 6 is another piping diagram of the cooling water channel mentioned above.
[Fig. 7] Fig. 7 is another piping diagram of the cooling water channel mentioned above.
[Fig. 8] Fig. 8 is another piping diagram of the cooling water channel mentioned above.
[Fig. 9] Fig. 9 is another piping diagram of the cooling water channel mentioned above.
[Fig. 10] Fig. 10 is another piping diagram of the cooling water channel mentioned above.
[Fig. 11] Fig. 11 is another piping diagram of the cooling water channel mentioned above.
[Fig. 12] Fig. 12 is another piping diagram of the cooling water channel mentioned above.
[Fig. 13] Fig. 13 is a cross-sectional view of a two-motor electric drive device that is applied in the electric vehicle according to the present invention.
[Fig. 14] Fig. 14 is a partial enlarged view of Fig. 13.

### Description of Embodiments

Hereunder, embodiments of the present invention are described based on the attached drawings.

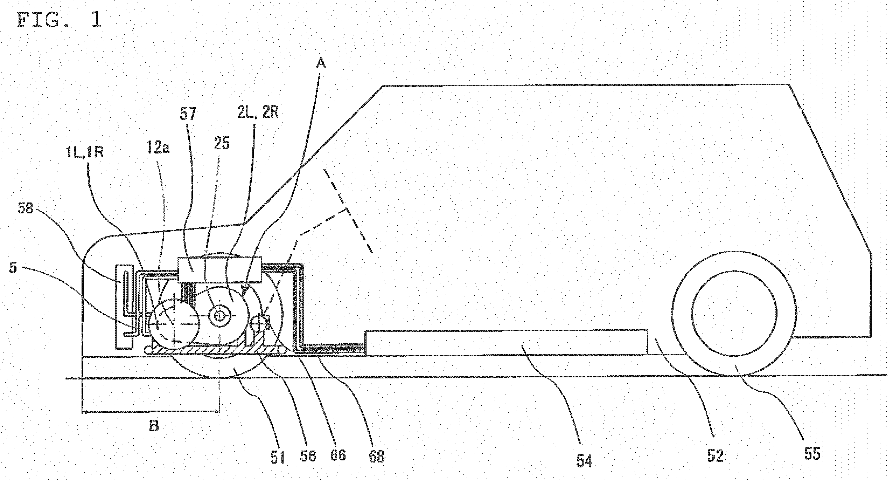

The electric vehicle according to the present invention is a front-wheel drive vehicle or four-wheel drive vehicle in which at least front wheels 51 are driven by a two-motor electric drive device A. An embodiment illustrated in Figs. 1 to 4 shows a front-wheel drive vehicle.

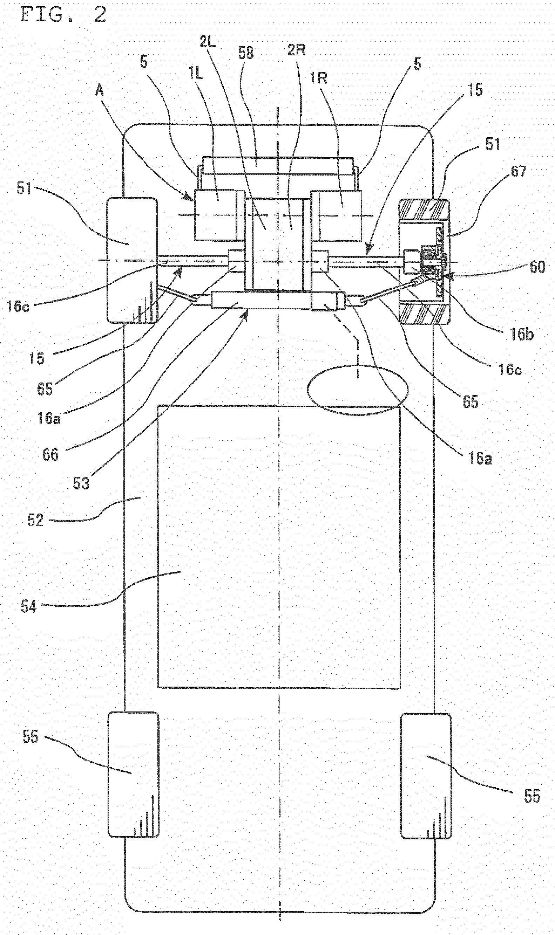

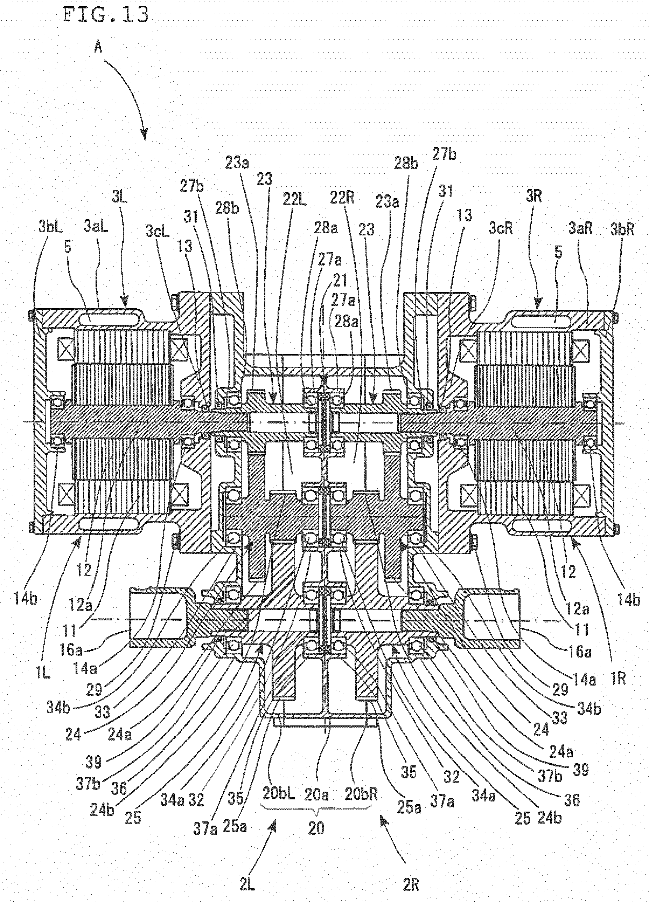

As illustrated in Fig. 2 and Fig. 13, the two-motor electric drive device A which drives the front wheels 51 has two electric motors 1L and 1R that are coaxially aligned in the lateral direction of the vehicle body, and two speed reducers 2L and 2R that receive and decelerate rotation of the two electric motors 1L and 1R, respectively. The two speed reducers 2L and 2R are integrally housed in the speed reducer housing 20. The two speed reducers 2L and 2R are integrated such that the two speed reducers 2L and 2R are sandwiched between the two electric motors 1L and 1R.

Motor shafts 12a of the two electric motors 1L and 1R of the two-motor electric drive device A come out from the electric motors 1L and 1R in the inward direction of the vehicle body 52 toward the speed reducers 2L and 2R. Speed reduction mechanisms of the two speed reducers 2L and 2R are independently provided on the left and right, respectively. Two output shafts 25 of the two-motor electric drive device A that are decelerated by the speed reducers 2L and 2R are coaxially aligned in the lateral direction of the vehicle body 52. The two output shafts 25 drive the left and right front wheels 51 through drive shafts 15, respectively.

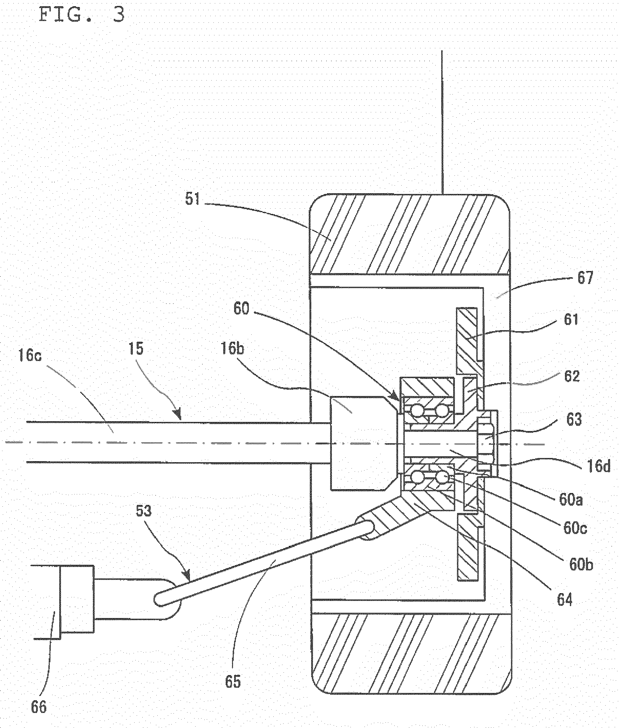

Each drive shaft 15 is formed by combining two constant-velocity joints 16a and 16b and one intermediate shaft 16c. The constant-velocity joint 16a that is on the inner side is connected to the output shaft 25, and as illustrated in Fig. 3, the constant-velocity joint 16b that is on the outer side is connected to a hub bearing 60 of the front wheel 51. The hub bearing 60 is composed of inner ring members 60a provided on the outer circumferential side of an outer ring stem 16d of the constant-velocity joint 16b on the outer side, an outer ring member 60b, and a double row of rolling elements 60c provided between the inner ring members 60a and the outer ring member 60b. A steering knuckle 64 is fixed to the outer circumference of the outer ring member 60b. A hub 62 is fixed to the inner circumference of the inner ring members 60a. The outer ring stem 16d of the constant-velocity joint 16b is fixed to the hub bearing 60 and the hub 62 by an axle nut 63. A wheel 67 is fixed by a hub bolt (not shown in the drawings) to the hub 62 such that a brake disk 61 is interposed therebetween.

As illustrated in Fig. 2 and Fig. 3, the steering knuckle 64 is connected through a tie rod 65 to a steering gearbox 66 that steers the front wheels 51.

The steering gearbox 66 is disposed at the rear of the two-motor electric drive device A.

As illustrated in Fig. 2 and Fig. 13, the two-motor electric drive device A is formed in a bilaterally symmetrical "T" shape in which the two speed reducers 2L and 2R are sandwiched by the two electric motors 1L and 1R.

As illustrated in Fig. 2, in the electric vehicle according to the present invention, the two-motor electric drive device A that is formed in a bilaterally symmetrical "T" shape is mounted on the center axis of the vehicle. As illustrated in Fig. 2, by mounting the two-motor electric drive device A that is formed in a bilaterally symmetrical "T" shape on the center axis of the vehicle, the drive shafts 15 that transmit a driving force are of equal length on the left and right, and torque steer does not occur. If the lengths of the drive shafts on the left and right are different, the torsional directions of the drive shafts will differ when a large torque is applied, such as when the vehicle starts to move, and a phenomenon such as the steering wheel being pulled to one side or the like is liable to occur. Further, because the same components can be used when the drive shafts 15 are of equal length on the left and right, since the necessity to separately make components for the left and right that arises in a case where the lengths of the drive shafts on the left and right are different is eliminated, there are also advantages with regard to cost, such as that the management costs decrease.

In the two-motor electric drive device A to which the present invention is applied, since the drive shafts 15 can be lengthened because the output shafts 25 can be disposed in a narrow width, design limitations such as a regular angle between the drive shafts 15 and the constant-velocity joints 16a and 16b and a bending angle when the suspension is stroked can be reduced.

Further, since the two-motor electric drive device A according to the present invention is bilaterally symmetrical, the weight balance between the left and right sides of a vehicle when mounted in a vehicle is good, and while there is mirror symmetry between a left steering wheel and a right steering wheel, there is the advantage that the arrangement of the steering device 53 that is constituted by the steering knuckle 64, the tie rod 65 and the steering gearbox 66 is facilitated and the like.

An electricity storage section 54 is mainly constituted by a battery or a capacitor or the like. When at least one of the two electric motors 1L and 1R operates as a drive motor, the electricity storage section 54 supplies electric power to the electric motors 1L and 1R, and when at least one of the two electric motors 1L and 1R operates as a power generator, the electricity storage section 54 is charged by electric power produced by the power generator.

As illustrated in Fig. 1 and Fig. 2, the electricity storage section 54 is mounted further to the rear of the vehicle than the two-motor electric drive device A that drives the front wheels 51, in a space between an axle of the front wheels 51 and an axle of the rear wheels 55 of the electric vehicle.

The electricity storage section 54 as a battery of the electric vehicle is provided with a capacity that is in accordance with a travel distance, and even in the case of a compact car is a heavy component with a weight that is close to 300 kg. If the electricity storage section 54 that is a heavy component is mounted at an overhang portion (front part of vehicle) on an outer side between the front and rear axles (within the wheelbase), the influence on handling will be significant and turning performance will be hindered. Therefore, in order to keep the center of gravity of the vehicle low and decrease the hindrance on turning performance, the electricity storage section 54 that is a heavy component is generally mounted at a lower part of the vehicle body between the front and rear axles (within the wheelbase) as illustrated in Fig. 1 and Fig. 2. Further, if the electricity storage section 54 is disposed at the overhang portion, since there is a risk that a problem may arise such as the battery that is the electricity storage section 54 being damaged by a collision accident and giving rise to an electric shock or the like. Therefore, the electricity storage section 54 is disposed in a space inside the vehicle within the wheelbase, at which it is difficult to damage the electricity storage section 54 in the event of a collision.

On the other hand, in order to secure a frictional force with the respect to ground surface of the front wheels 51 which are the drive wheels and also the steering wheels, it is necessary to design the vehicle so as to make the load applied to the front wheels 51 large. However, if the electricity storage section 54 which has a large weight is mounted within the wheelbase as described above, because the load is distributed substantially equally between the front wheels 51 and the rear wheels 55, the load ratio with respect to the front wheels 51 is liable to become relatively smaller. In such case, if a state is entered in which the center of gravity moves to the rear part of the vehicle such as when starting to move suddenly or when travelling up an upward slope, or in which the road surface is slippery, such as during rainy weather, it will be difficult for the driving force of the front wheels 51 that are the drive wheels and the steering wheels to be transmitted due to idle rotation, and it will be difficult for the steering to be effective.

Since drivers normally tend to sit with their legs hanging down, in order to maintain the height relation between the pedals and seat at the driver's seat, there is a tendency for the electricity storage section 54 that is disposed within the wheelbase to be disposed at the rearward part within the wheelbase and not at the feet area of the front seats, and thus a large part of the load of the electricity storage section 54 tends to act on the rear wheels 55.

Therefore, in the present invention, in order to increase the load that is applied to the front wheels 51 to secure a frictional force with respect to the ground surface of the front wheels 51 that are drive wheels and also steering wheels, a configuration is adopted so that the electric motors 1L and 1R that are heavy components even among the members constituting the two-motor electric drive device A that drives the front wheels 51 are disposed so as to be further to the front of the vehicle than a line linking the axial centers of the left and right front wheels 51.

Thereby, since the load of the electric motors 1L and 1R can be effectively loaded onto the front wheels 51, it is easy to secure the frictional force of the front wheels 51, a driving force and turning performance can be secured, and improvement of the travel performance by right and left independent driving that controls the driving forces of the left and right wheels, respectively, that is a feature of the two-motor electric drive device A which is equipped with the two electric motors 1L and 1R can be achieved.

Further, when the electric motors 1L and 1R are disposed forward of the axial centers of the left and right front wheels 51, since extra space can be created at the feet area of the front seats, particularly at the pedal space of the driver's seat, limitations are unlikely to arise when designing the pedal layout. Conversely, if the electric motors 1L and 1R are disposed to the rear of the axial centers of the front wheels 51, because the electric motors 1L and 1R will be on the vehicle interior side, limitations will arise when designing the pedal layout.

In addition, when the electric motors 1L and 1R are disposed frontward of the axial centers of the front wheels 51, because the electric motors 1L and 1R are at positions that are separated from the vehicle interior, in the event of the vehicle being involved in a collision at the front end thereof, the possibility of the two-motor electric drive device A being pushed and entering into the vehicle interior is reduced, and the securement of survival space is facilitated.

In the case of mounting the two-motor electric drive device A that respectively controls the driving forces of the left and right front wheels 51 in the vehicle body 52, as illustrated in Fig. 1, a sub-frame 56 that fixes the two-motor electric drive device A to the vehicle body 52 is provided, and the two-motor electric drive device A is mounted in the vehicle body 52 through the sub-frame 56.

With respect to fixing of the sub-frame 56 to the vehicle body 52, and also to fixing of the two-motor electric drive device A to the sub-frame 56, it is preferable for the respective components to be fixed in a state that allows displacement to some extent, through rubber bushing or the like that has an effect that absorbs vibrations, and by disposing the two-motor electric drive device A on the sub-frame 56, the quietness properties can be enhanced.

Further, in the case of mounting the two-motor electric drive device A in the vehicle body 52, by separately assembling a structure in which the two-motor electric drive device A, a suspension device, a steering device and the like are mounted on the sub-frame 56, and attaching these together to the vehicle body 52, it is possible to make the assembly process more flexible.

The two-motor electric drive device A is fixed to the sub-frame 56 such that the lower part of the two-motor electric drive device A is at approximately the same height as the undersurface of the vehicle body.

An inverter unit 57 that controls electric power when the electric motors 1L and 1R of the two-motor electric drive device A are driven as a motor and regenerate power as a power generator is preferably disposed in proximity to the two-motor electric drive device A, such as on top of the two-motor electric drive device A in order to decrease loss caused by resistance in power lines to the electric motors 1L and 1R and to also reduce the weight of the inverter unit 57 itself. The inverter unit 57 is a unit that receives DC power from the electricity storage section 54, internally converts the DC power to three-phase AC electric power for two systems, and supplies the three-phase AC electric power to the left and right electric motors 1L and 1R. Although one inverter unit 57 may be provided for each of the left and right electric motors 1L and 1R, respectively, a DC power supply cable 68 will be required for each of the inverter units 57 and the number of components will increase and the like, and for these reasons it is preferable to provide only one inverter unit 57.

In the embodiment illustrated in Fig. 1 and Fig. 2, since the electric motors 1L and 1R of the two-motor electric drive device A are disposed frontward of an axle of the left and right front wheels 51, the steering gearbox 66 of the steering device 53 that steers the front wheels 51 is disposed to the rear relative to the axle of the front wheels 51 on the opposite side to the electric motors 1L and 1R. The arrangement of the steering device 53 is a similar arrangement to a front-wheel-drive vehicle (FF vehicle) with a common front engine.

The embodiment illustrated in Fig. 1 and Fig. 2 is a transverse type in which the motor shaft 12a of the electric motors 1L and 1R of the two-motor electric drive device A is disposed frontward of the axle of the left and right front wheels 51, and the output shafts 25 of the speed reducers 2L and 2R are disposed side by side coaxially with the axle of the front wheels 51. In this transverse-type two-motor electric drive device A, because the electric motors 1L and 1R that are heavy components can be provided at a low position, the center of gravity of the vehicle can be made low, and the height of a bonnet that serves as the cover for a space that houses the electric drive device can also be made low, and there are thus the advantages that air resistance during travel decreases and the degree of freedom in the vehicle body design increases.

In the embodiment in Fig. 1 and Fig. 2, the motor shafts 12a of the electric motors 1L and 1R of the two-motor electric drive device A are disposed at a lower position than the axle of the left and right front wheels 51.

In a case where the two-motor electric drive device A is made a transverse type as in the embodiment illustrated in Fig. 1 and Fig. 2, because the installation height of the two-motor electric drive device A can be made low, it is possible to install the inverter unit 57 on top of the two-motor electric drive device A.

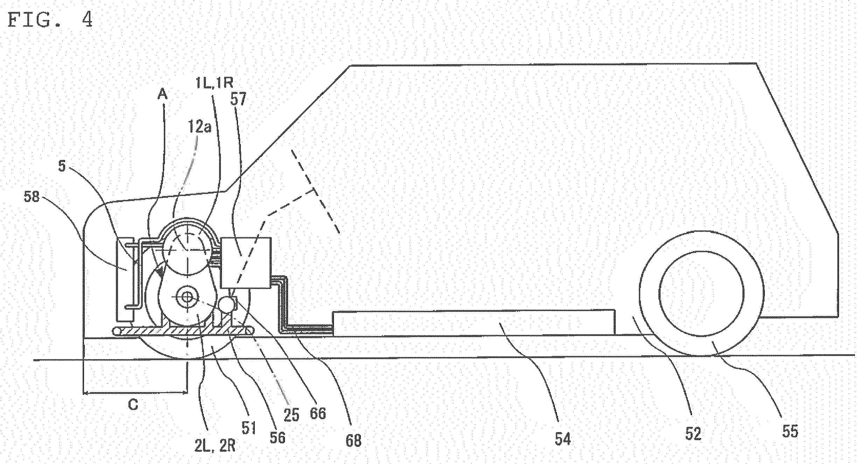

On the other hand, an embodiment illustrated in Fig. 4 is a vertical type in which the output shafts 25 of the speed reducers 2L and 2R are disposed side by side coaxially with the axle of the left and right front wheels 51, and the motor shafts 12a of the electric motors 1L and 1R of the two-motor electric drive device A are disposed above the axle of the left and right front wheels 51.

In a case where the two-motor electric drive device A is a vertical type as in the embodiment illustrated in Fig. 4, because the installation height of the two-motor electric drive device A is high, the inverter unit 57 is disposed to the rear of the axle of the left and right front wheels 51.

If the load applied to the front wheels 51 that are steering and drive wheels is small, a frictional force between the tires and the road surface will decrease, and if the driving force exceeds the frictional force, a state will be entered in which the tires rotate idly, that is, a state will be entered in which traction is not imparted to the front wheels 51.

If the two-motor electric drive device A is made a transverse type, and the electric motors 1L and 1R that are weighty are disposed at the front part of the vehicle as in the embodiment illustrated in Fig. 1 and Fig. 2, imparting of traction to the front wheels 51 is facilitated.

However, if a configuration is adopted such that the load is applied at a position that is quite far from the axle of the front wheels 51, that is, if there is a large mass at an overhang portion, understeer will occur and it will be difficult to turn at a time of turning, and for this reason it is important to have an appropriate weight balance that ensures understeer does not occur.

If the overhang portion, that is, the length from the vehicle front end to the axle of the left and right front wheels 51 is large, understeer will occur and it will be difficult to turn at a time of turning. However, in a case where the two-motor electric drive device A is a vertical type as in the embodiment illustrated in Fig. 4, a length C from the vehicle front end to the axle of the left and right front wheels 51 can be made shorter than a length B from the vehicle front end to the axle of the left and right front wheels 51 in the embodiment illustrated in Fig. 1 and Fig. 2 in which the two-motor electric drive device A is a transverse type, and hence the overhang portion can be shortened.

On the other hand, when the two-motor electric drive device A is a transverse type as in the embodiment illustrated in Fig. 1, the center of gravity is low and imparting of traction to the front wheels 51 is facilitated.

When the two-motor electric drive device A is disposed inside the vehicle body, it is difficult for travelling wind to contact against the electric motors 1L and 1R and it is thus difficult for cooling to be performed by air cooling. Therefore, to supplement the cooling by air cooling, a configuration is adopted so as to perform cooling of the electric motors 1L and 1R by means of cooling water.

A configuration is adopted so as to water-cool the two electric motors 1L and 1R of the two-motor electric drive device A by means of cooling water by providing a cooling water channel 5 inside electric motor housings 3L and 3R.

The cooling water of the cooling water channel 5 is cooled by releasing heat by heat exchange with air at a radiator 58 that is separately mounted in the vehicle body.

The radiator 58 is mounted at a position that is further toward the front of the vehicle body than the two-motor electric drive device A, and is mounted substantially perpendicular to the ground surface so as to be at a right angle to the travelling direction in order to efficiently contact against travelling wind.

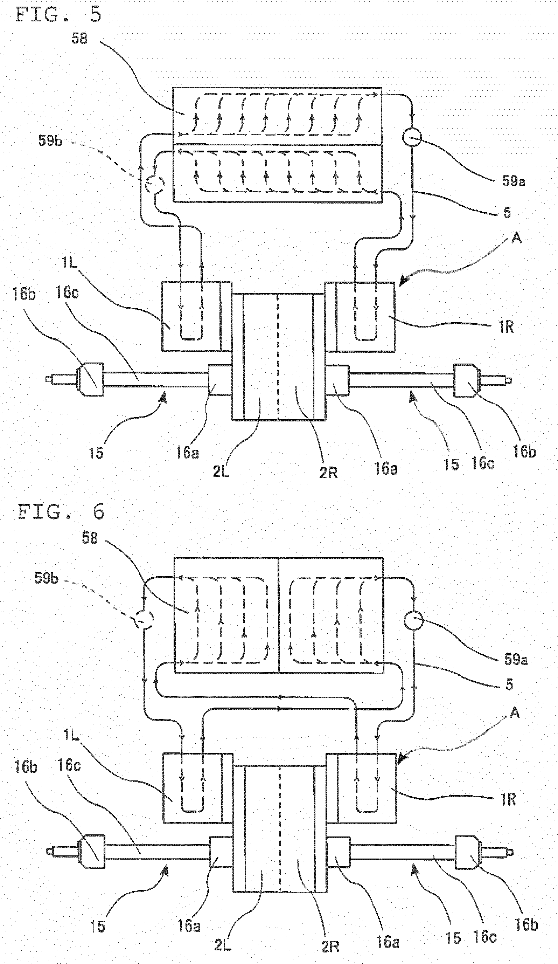

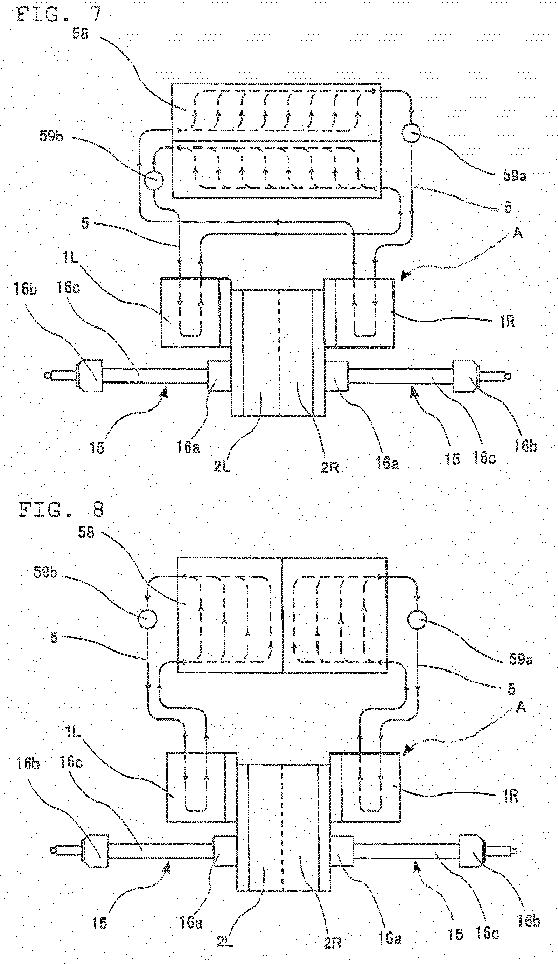

The cooling water channel 5 of the two electric motors 1L and 1R may be an in-line system that has a single system of piping in which the cooling water channel 5 is continuous between the two electric motors 1L and 1R as illustrated in Fig. 5 and Fig. 6, in which the cooling water releases heat at the radiator 58 after cooling one electric motor 1L and then releases heat at the radiator 58 after cooling the other electric motor 1R, or as illustrated in Fig. 7 and Fig. 8, may be a parallel system of two independent systems in which piping of the cooling water channel 5 is independently provided in each of the two electric motors 1L and 1R.

Although only one radiator 58 is provided in each of the embodiments illustrated in Fig. 5 to Fig. 8, the inside of the radiator 58 is divided into two systems, with the cooling water from one electric motor 1L and the cooling water from the other electric motor 1R being cooled in respectively separate systems (regions) inside the radiator 58.

The embodiment illustrated in Fig. 5 is a piping example of an in-line system in which the radiator 58 is divided into two upper and lower systems, in which operations in which cooling water releases heat at the upper half of the radiator 58 after cooling the electric motor 1L, the cooling water that released heat at the upper half of the radiator 58 is then fed to the other electric motor 1R, and after cooling the electric motor 1R, the cooling water is returned to the lower half of the radiator 58 and releases heat, and thereafter the cooled cooling water is fed to the electric motor 1L to cool the electric motor 1L are successively repeated.

In the embodiment illustrated in Fig. 5, even when the radiator 58 is divided into two upper and lower systems, because the cooling water channel 5 is a continuous in-line system, as long as the flow rate at a pump 59a that circulates the cooling water in the cooling water channel 5 is sufficient, it is not necessary to separately provide a pump 59b, and only the pump 59a is required.

The embodiment illustrated in Fig. 6 is another piping example of an in-line system in which the radiator 58 is divided into two systems on the left and right sides, in which operations in which cooling water releases heat at the right half of the radiator 58 after cooling one electric motor 1L, and after cooling the other electric motor 1R, the cooling water releases heat at the left half of the radiator 58 are successively repeated.

In the embodiment illustrated in Fig. 6 also, even when the radiator 58 is divided into two systems on the left and right sides, because the cooling water channel 5 is a continuous in-line system, as long as the flow rate at the pump 59a that circulates the cooling water in the cooling water channel 5 is sufficient, it is not necessary to separately provide the pump 59b, and only the pump 59a is required.

The embodiment illustrated in Fig. 7 is a piping example of a parallel system having two independent systems in which the radiator 58 is divided into two upper and lower systems, and the cooling water channels 5 of the two electric motors 1L and 1R are each cooled independently using the radiator 58 having the two upper and lower systems.

The embodiment illustrated in Fig. 8 a piping example of a parallel system having two independent systems in which the radiator 58 is divided into two systems on the left and right sides, and the cooling water channels 5 of the two electric motors 1L and 1R are each cooled independently using the radiator 58 having the two systems on the left and right sides.

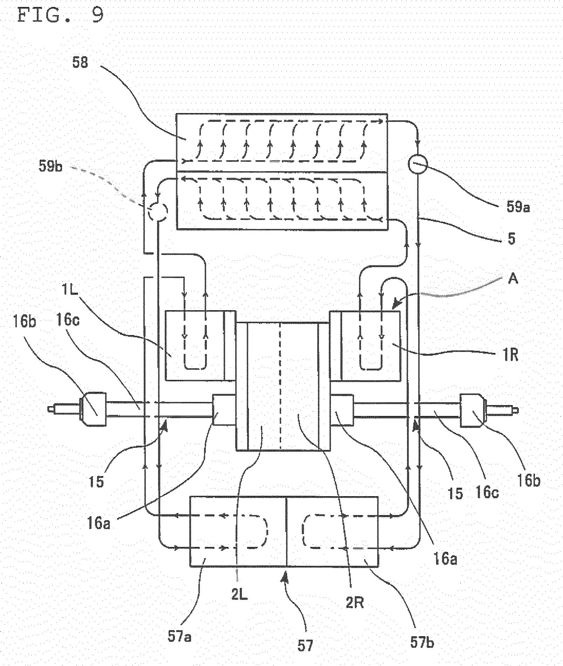

Among the devices mounted in the electric vehicle, the inverter unit 57 that receives DC power from the electricity storage section 54, internally converts the DC power to three-phase AC electric power for two systems, and supplies the three-phase AC electric power to the left and right electric motors 1L and 1R, and a DC/DC converter 69 that receives DC power from the electricity storage section 54, internally reduces the voltage of the DC power, and supplies electric power to auxiliary equipment for travel and for illumination and the like may be mentioned as examples of devices that require cooling by water-cooling. Embodiments illustrated in Fig. 9 to Fig. 12 are examples in which the inverter unit 57 and the like are disposed partway along the cooling water channel 5, and the inverter unit 57 and the like are cooled by water.

The embodiment illustrated in Fig. 9 is a piping example of an in-line system in which the radiator 58 is divided into two upper and lower systems, in which operations in which cooling water releases heat at the upper half of the radiator 58 after cooling one electric motor 1L, and after cooling the other electric motor 1R, the cooling water releases heat at the lower half of the radiator 58 are successively repeated. In this case, although there is only one inverter unit 57, the inside of the inverter unit 57 includes a part 57a that drives the electric motor 1L and a part 57b that drives the electric motor 1R, and the cooling water channel 5 that cools the inverter unit 57 is divided into a water channel that cools the part 57a and a water channel that cools the part 57b. A configuration is adopted so that cooling water is supplied to the part 57a inside the inverter unit 57 before cooling the electric motor 1L, and cooling water is supplied to the part 57b before cooling the electric motor 1R, so that the electric motors 1L and 1R are cooled after first cooling the inverter unit 57 for which the allowable temperature is low.

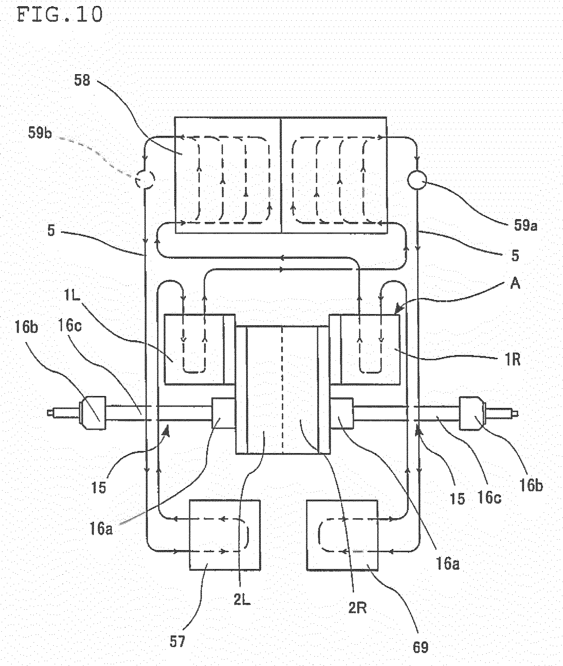

An embodiment illustrated in Fig. 10 is an in-line system in which the piping is arranged so as to be continuous with respect to the two electric motors 1L and 1R on the left and right, similarly to the embodiment illustrated in Fig. 9. The embodiment in Fig. 10 differs from the embodiment in Fig. 9 in the respect that the radiator 58 is divided into two systems on the left and right, and that the DC/DC converter 69 is disposed together with the inverter unit 57 partway along the cooling water channel 5. A configuration is adopted so that cooling water is supplied to the inverter unit 57 before cooling the electric motor 1L, and cooling water is supplied to the DC/DC converter 69 before cooling the electric motor 1R, so that the electric motors 1L and 1R are cooled after first cooling the inverter unit 57 or the DC/DC converter 69 for which the allowable temperature is low.

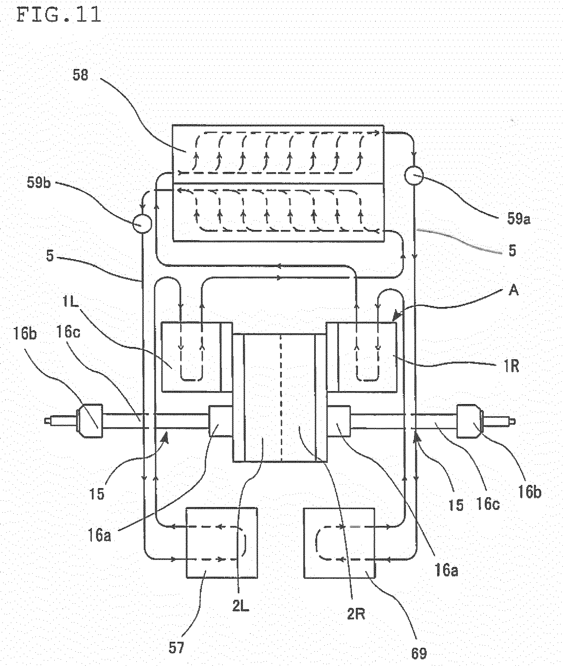

The embodiment illustrated in Fig. 11 is a piping example in which the radiator 58 is divided into two upper and lower systems, in which the cooling water channels 5 of the two electric motors 1L and 1R are each cooled independently using the radiator 58 having the two upper and lower systems. In this embodiment, the piping of the cooling water channels 5 is arranged so that cooling water is supplied to the inverter unit 57 before independently cooling the electric motor 1L, and cooling water is supplied to the DC/DC converter 69 before independently cooling the electric motor 1R, so that the electric motors 1L and 1R are cooled after first cooling devices for which the allowable temperature is low.

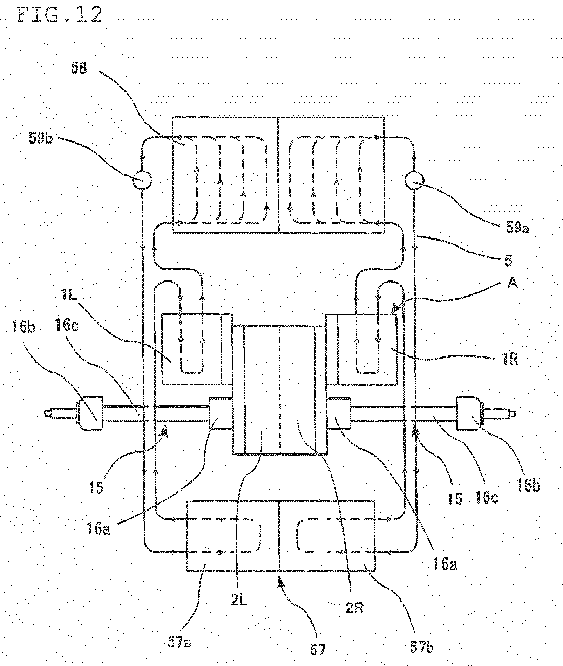

Similarly to the embodiment illustrated in Fig. 11, the embodiment illustrated in Fig. 12 is an example of a piping arrangement in which the cooling water channels 5 are independently provided with respect to the two electric motors 1L and 1R on the left and right. The embodiment illustrated in Fig. 12 differs from the embodiment in Fig. 11 in the respect that the radiator 58 is divided into two systems on the left and right sides, and also in that, similarly to the embodiment illustrated in Fig. 9, the inverter unit 57 includes the part 57a that drives the electric motor 1L and the part 57b that drives the electric motor 1R, and the part 57a and the part 57b are independently cooled. In the embodiment illustrated in Fig. 12, it is assumed that an unshown DC/DC converter is air-cooled, and is not related to the cooling water channels 5.

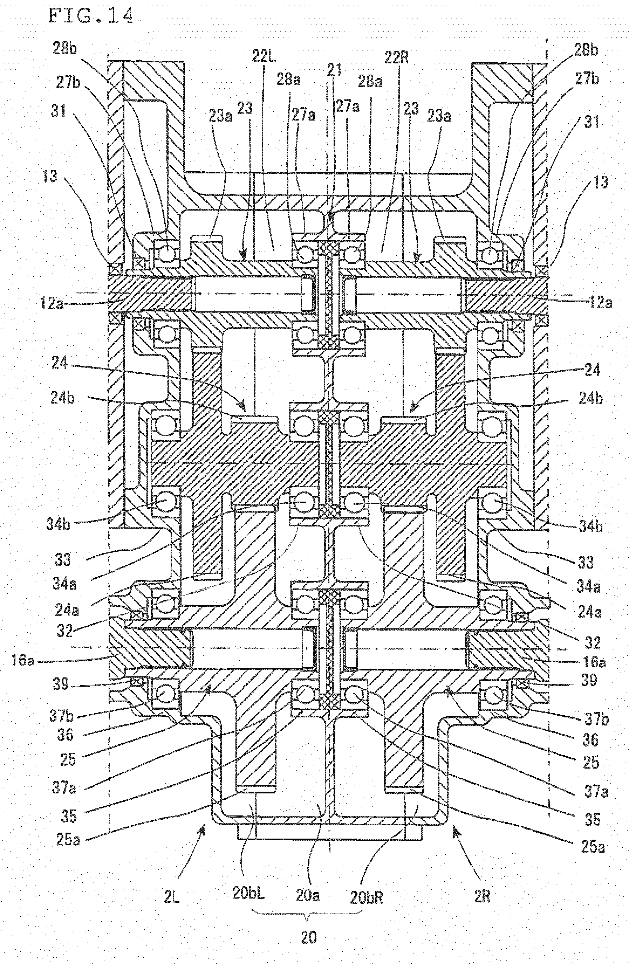

Next, the details of the two-motor electric drive device A will be described based on Fig. 13 and Fig. 14.

As illustrated in Fig. 13, the two-motor electric drive device A is a device in which the speed reducer housing 20 which houses the two speed reducers 2L and 2R in parallel on the left and right is disposed at the center, and electric motor housings 3L and 3R for the two electric motors 1L and 1R are fixedly disposed on the left and right of the speed reducer housing 20.

As illustrated in Fig. 13, the cooling water channel 5 that circulates a coolant is formed in the circumferential direction in the electric motor housings 3L and 3R of the two electric motors 1L and 1R on the left and right.

As illustrated in Fig. 13, in the two-motor electric drive device A, the left and right electric motors 1L and 1R are housed inside the electric motor housings 3L and 3R.

The electric motor housings 3L and 3R are constituted by cylindrical electric motor housing main bodies 3aL and 3aR in which an outside face having the cooling water channel 5 that allows cooling water to flow in the circumferential direction is opened, outside walls 3bL and 3bR that block off the respective outside faces of the electric motor housing main bodies 3aL and 3aR, and inside walls 3cL and 3cR that separate the speed reducers 2L and 2R on the inner side of the electric motor housing main bodies 3aL and 3aR. An opening portion from which the motor shaft 12a is extended is provided in each of the inside walls 3cL and 3cR of the electric motor housing main bodies 3aL and 3aR.

As illustrated in Fig. 13, as the electric motors 1L and 1R, radial gap-type electric motors are used in which a stator 11 is provided on an inner circumferential face of each of the electric motor housing main bodies 3aL and 3aR, and a rotor 12 is provided at a distance from the inner circumference of the stator 11. Although not illustrated in the drawings, an axial gap-type electric motor may also be used.

The rotor 12 has the motor shaft 12a at a center part. The respective motor shafts 12a are extended to the sides of the speed reducers 2L and 2R from opening portions in the inside wall 3cL and 3cR of the electric motor housing main bodies 3aL and 3aR, respectively. A seal member 13 is provided between the opening portions of the electric motor housing main bodies 3aL and 3aR and the motor shafts 12a.

Each motor shaft 12a is rotatably supported via rolling bearings 14a and 14b by the inside walls 3cL and 3cR and outside walls 3bL and 3bR of the electric motor housing main bodies 3aL and 3aR (Fig. 13).

The speed reducer housing 20 which houses the two speed reducers 2L and 2R that are provided in parallel on the left and right sides has a three-piece structure that includes a center housing 20a, and left and right side-face housings 20bL and 20bR that are fixed to the two side faces of the center housing 20a. The left and right side-face housings 20bL and 20bR are formed in an approximately bilaterally symmetrical shape.

The left and right side-face housings 20bL and 20bR are fixed by a plurality of bolts (omitted from the diagrammatic illustration) to opening portions of the two side faces of the center housing 20a.

The two electric motors 1L and 1R are fixedly disposed on the left and right of the speed reducer housing 20 by fixing together the side faces that face the vehicle body outer side of the side-face housings 20bL and 20bR of the speed reducer housing 20 and the inside walls 3cL and 3cR of the electric motor housing main bodies 3aL and 3aR of the electric motors 1L and 1R by means of a plurality of bolts 29 (Fig. 14).

As illustrated in Fig. 14, a partition wall 21 is provided at the center of the center housing 20a. The speed reducer housing 20 is divided into two parts that are on the left and right by the partition wall 21, to thereby parallelly provide independent left and right housing chambers 22L and 22R that house the two speed reducers 2L and 2R.

As illustrated in Fig. 13 and Fig. 14, the speed reducers 2L and 2R are parallel-axis gear speed reducers that are provided in a bilaterally symmetrical state and which each include: an input shaft 23 having an input gear 23a to which a motive force from the motor shaft 12a is transmitted; an intermediate shaft 24 having a large-diameter gear 24a that engages with the input gear 23a, and a small-diameter gear 24b that engages with an output gear 25a; and the output shaft 25 that has the output gear 25a, and that is extended from the speed reducer housing 20 and transmits a driving force to the front wheel 51 that is a drive wheel through the drive shaft 15 (see Fig. 14).

With respect to the gears used to constitute the parallel-axis gear speed reducers, helical gears are desirable from the viewpoint of quietness properties.

The two ends of the input shaft 23 of the speed reducers 2L and 2R are rotatably supported via rolling bearings 28a and 28b by boss portions 27a formed at both faces on the left and right of the partition wall 21 of the center housing 20a, and boss portions 27b formed in the side-face housings 20bL and 20bR.

The ends which face the vehicle body outer side of the respective input shafts 23 are extended to the outside from opening portions provided in the side-face housings 20bL and 20bR, and a seal member 31 is provided between the respective opening portions and the outside end of each input shaft 23 to thereby prevent leakage of lubrication oil that is encapsulated in the speed reducers 2L and 2R.

The input shaft 23 is a hollow structure, and the motor shaft 12a is inserted into the hollow input shaft 23. The input shaft 23 and the motor shaft 12a are spline-connected (also includes serration; the same applies hereunder).

The intermediate shaft 24 is a stepped gear which has, on its outer circumferential surface, the large-diameter gear 24a that engages with the input gear 23a, and the small-diameter gear 24b that engages with the output gear 25a. The two ends of the intermediate shaft 24 are supported via rolling bearings 34a and 34b by boss portions 32 formed on both sides of the partition wall 21 of the center housing 20a and by boss portions 33 formed on the side-face housings 20bL and 20bR.

The output shaft 25 has the large-diameter output gear 25a, and is supported via rolling bearings 37a and 37b by boss portions 35 formed on both sides of the partition wall 21 of the center housing 20a, and boss portions 36 formed on the side-face housings 20bL and 20bR.

The respective ends facing the vehicle body outer side of each of the output shafts 25 are extended to the outside of the speed reducer housing 20 from the respective opening portions formed in the side-face housings 20bL and 20bR, the constant-velocity joint 16a that is on the inner side of the drive shaft 15 is connected to the outer circumferential face of the end facing the vehicle body outer side of the extended output shaft 25, and the end facing the vehicle body outer side of the output shaft 25 is connected to the front wheel 51 that is a drive wheel through the intermediate shaft 16c of the drive shaft 15 and the constant-velocity joint 16b on the outer side (Fig. 2).

A seal member 39 is provided between the end facing the vehicle body outer side of each of the output shafts 25 and the opening portions formed in the side-face housings 20bL and 20bR, to thereby prevent the leakage of lubrication oil that is encapsulated in the speed reducers 2L and 2R.

The present invention is not limited in any way by the embodiments described above, and naturally the present invention can be implemented in other various forms without departing from the scope of the present invention. The scope of the present invention is defined by the attached claims, and also includes all modifications of equivalent meaning and falling within the scope of the attached claims.

### Reference Signs List

1L, 1R: Electric Motor
2L, 2R: Speed Reducer
3L, 3R: Electric Motor Housing
3aL, 3aR: Electric Motor Housing Main body
3bL, 3bR: Outside Wall
3cL, 3cR: Inside Wall
5: Cooling Water Channel
11: Stator
12: Rotor
12a: Motor Shaft
13: Seal Member
14a, 14b: Rolling Bearings
15: Drive Shaft
16a, 16b: Constant Velocity Joint
16c: Intermediate Shaft
16d: Outer Ring Stem
20: Speed Reducer Housing
20a: Center Housing
20bL, 20bR: Side-face Housing
21: Partition Wall
22L, 22R: Housing Chamber
23: Input Shaft
23a: Input Gear
24: Intermediate Shaft
24a: Large-diameter Gear
24b: Small-diameter Gear
25: Output Shaft
25a: Output Gear
27a, 27b: Boss Portion
28a, 28b: Rolling Bearings
29: Bolt
31: Seal Member
32, 33: Boss Portion
34a, 34b: Rolling Bearings
35, 36: Boss Portion
37a, 37b: Rolling Bearings
39: Seal Member
51: Front Wheels
52: Vehicle Body
53: Steering Device
54: Electricity Storage Section
55: Rear Wheel
56: Sub-frame
57: Inverter Unit
57a, 57b: Part
58: Radiator
59a, 59b: Pump
60: Hub Bearing
61: Brake Disk
62: Hub
60a: Inner Ring Member
60b: Outer Ring Member
60c: Rolling Element
62: Steering Knuckle
63: Axle Nut
64: Steering Knuckle
65: Tie Rod
66: Steering Gearbox
67: Wheel
68: Direct-current Power Supply Cable
69: DC/DC Converter
A: Electric Drive Device

## Claims

1. An electric vehicle that drives at least front wheels, comprising a sub-frame that fixes a two-motor electric drive device that drives the front wheels at a front part of a vehicle body, wherein the two-motor electric drive device that is fixed to the sub-frame includes two electric motors that are coaxially aligned in a lateral direction of the vehicle body, and two speed reducers that receive and decelerate a rotation of the two electric motors, respectively; the two speed reducers are integrally housed in a housing; the two speed reducers are sandwiched between the two electric motors and thereby integrated with each other; axles of the two electric motors come out from the electric motors in an inward direction of the vehicle body towards the speed reducers; speed reduction mechanisms of the two speed reducers are independent on the left and right, respectively; two output shafts of the electric drive device that are decelerated by the speed reducers are coaxially aligned in the lateral direction of the vehicle body; the two output shafts drive each of left and right wheels, that are front wheels through a drive shaft, respectively; a lower part of the two-motor electric drive device is fixed to the sub-frame so as to be approximately the same height as an undersurface of the vehicle body; an electricity storage section that, when at least one electric motor of the two electric motors operates as a drive motor, supplies electric power to the electric motor, and when at least one electric motor of the two electric motors operates as a power generator, is charged with electric power produced by the power generator is mounted in a space between a front-wheel axle and a rear-wheel axle at a position that is further toward rear of the vehicle than the two-motor electric drive device that drives the front wheels; and an inverter unit that, when driving an electric motor as a drive motor, converts direct-current power from the electricity storage section to three-phase alternating-current electric power, and converts three-phase alternating-current electric power produced by an electric motor as a power generator to direct-current power for charging the electricity storage section is disposed in proximity to the two-motor electric drive device.

2. The electric vehicle according to claim 1, wherein the electricity storage section is mounted to a lower part of the vehicle body such that an undersurface of the electricity storage section is at approximately the same height as a lower part of the two-motor electric drive device.

3. The electric vehicle according to claim 1 or 2, wherein
the respective electric motors on left and right of the two-motor electric drive device and the output shafts are connected by the speed reducers; the output shaft is a part of the speed reducer; the electric motor and the speed reducer are integrated with and housed in the housing; the output shaft comes out from the housing; and the speed reducer has a plurality of gear shafts.

4. The electric vehicle according to any one of claims 1 to 3, wherein
the two-motor electric drive device is mounted at a center in a transverse direction of the vehicle, and the drive shafts that are connected to the output shafts and transmit a driving force to the left and right wheels, respectively, are made the same length on the left and right.

5. The electric vehicle according to any one of claims 1 to 4, wherein
the axle of the electric motor is the same height as the output shaft of the drive device or is lower than the output shaft.

6. The electric vehicle according to any one of claims 1 to 5, wherein
the two electric motors of the two-motor electric drive device that drives the front wheels are disposed further to the front of the vehicle body than an axle of the left and right front wheels, and a steering box of a steering device is disposed rearward of the electric drive device.

7. The electric vehicle according to any one of claims 1 to 6, wherein
a cooling water channel is provided inside an electric motor housing that houses the two electric motors of the two-motor electric drive device, and a radiator that cools cooling water of the cooling water channel is mounted at a front part of the vehicle body.

8. The electric vehicle according to claim 7, wherein
the radiator is divided into two systems on top and bottom or left and right, and one system of the two systems is connected to a cooling water channel of one electric motor of the two electric motors, and the other system of the two systems is connected to a cooling water channel of the other electric motor of the two electric motors.

9. The electric vehicle according to claim 7 or 8, wherein
another device such as an inverter unit is disposed partway along the cooling water channel, and the other device is cooled.
